(19) Europäisches Patentamt
European Patent Office
Office européen des brevets

(11) Publication number: 0 239 924 B1

# (12) EUROPEAN PATENT SPECIFICATION

(45) Date of publication of patent specification: 09.01.91

(51) Int. Cl.[5]: C 09 K 11/76, H 01 J 61/44

(21) Application number: 87104406.1

(22) Date of filing: 25.03.87

## (54) Fluorescent lamp using calcium halophosphate phosphor coating.

(30) Priority: 04.04.86 US 849082

(43) Date of publication of application:
07.10.87 Bulletin 87/41

(45) Publication of the grant of the patent:
09.01.91 Bulletin 91/02

(84) Designated Contracting States:
DE FR GB IT NL

(56) References cited:
EP-A-0 173 994

(73) Proprietor: GENERAL ELECTRIC COMPANY
1 River Road
Schenectady New York 12305 (US)

(72) Inventor: Gillooly, George Rice
1395 Oakridge Drive
Cleveland Heights Ohio 44121 (US)
Inventor: Soules, Thomas Frederick
324 Claymore
Richmond Heights Ohio 44143 (US)

(74) Representative: Sieb, Rolf, Dr. et al
General Electric - Deutschland Patentabteilung
Praunheimer Landstrasse 50
D-6000 Frankfurt/Main (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 239 924 B1

## Description

### Background of the Invention

This invention relates generally to fluorescent lamps utilizing a modified calcium halophosphate phosphor to produce efficient lumen output together with good color rendition at a reduced phosphor cost. More particularly, a fluorescent lamp producing white color illumination is disclosed wherein the calcium halophosphate phosphor material being employed as the coating has been modified in order to utilize less of the modified phosphor material without substantially decreasing the lamp performance characteristics.

Calcium halophosphate phosphors have now been used in fluorescent lamps to provide white color illumination for a great number of years including use in combination with still other phosphors which improve the color rendering capability of the lamp. Original "cool white" color fluorescent lamps using this phosphor generated around 2800 lumens at a 40T12 size with 3.0 milligrams per square centimeter dry coating weight. Said original phosphor is reported to have contained an antimony level of approximately 0.09 mole per mole of the phosphor and to have been deposited as agglomerates of smaller size crystals having an individual particle size around 4.5—6.5 microns average diameter still containing many finer size particles. Continuing development of this phospor has proceeded over the years to increase the lamp light output at this lamp size to its present level of approximately 3150 lumens after 100 hours with a dry phosphor coating weight of about 4.5 milligrams per square centimeter. The present phosphor has a lower antimony level of approximately 0.06 mole per mole of phosphor and the phosphor particle size resides in the range 10—12 microns average diameter. Understandably such improvement has considerably increased the phosphor coating weight in conventional fluorescent lamps resulting in higher cost lamp manufacture.

It is desirable, to decrease these lamp manufacturing costs by using the least amount of phosphor needed in the phosphor coating. On the other hand, simply decreasing the phosphor coating weight with the conventional phosphor material produces a significant lumen decrease in the lamp starting at a coating weight of less than around 3.5 milligrams per square centimeter and does so in an accelerating manner as the coating weight is further decreased. This undesirable result is attributable to some of the exciting ultraviolet radiation produced by the lamp discharge now penetrating through the entire phosphor coating instead of being converted by said coating to visible illumination.

It is possible to reduce phosphor coating weight by reducing the phosphor particle size. However this will again produce some loss of ultraviolet radiation since the resulting thinner layer of smaller size phosphor particles absorbs the ultraviolet radiation less efficiently. Such difficulties can be overcome only by modifications which increase the UV absorbing power of the phosphor and does not produce greater loss of ultraviolet conversion efficiency of the phosphor coating.

### Summary of the Invention

It has now been discovered, surprisingly, that particular modifications made in the calcium halophosphate phosphor itself result in lower phosphor coating weights without sacrificing lumen output in a fluorescent lamp producing white color illumination. It is first required that a specific particle size range of the calcium halophosphate phosphor be maintained in order to substantially cover the entire glass surface area with material thereby preventing the ultraviolet radiation from the lamp discharge from simply passing through the phosphor medium to any uncovered glass surface. Such coverage of the glass surface is provided when the phosphor particle size extends from about 4 microns average diameter up to about 8 microns average diameter and with such reduction in particle size from the conventional phosphor material being preferably devoid of smaller size phosphor crystals which only poorly absorb the impinging ultraviolet radiation. The second essential requirement for reducing the coating weight of this phosphor while still maintaining efficient lumen output in a fluorescent lamp is raising the antimony content for increased absorption of the incident ultraviolet radiation at the smaller phosphor particle size. By meeting both requirements it becomes possible to reduce the dry coating weight of the modified calcium halphosphate phosphor to a range from about 1.7 milligrams per square centimeter up to about 4.0 milligrams per square centimeter at the above disclosed particle size range while still maintaining a lumen output in a 40T12 size cool white type fluorescent lamp at a minimum 3000 lumen level after 100 hours of lamp operation.

Basically, the present improvement is realized in a fluorescent lamp as defined in claim 1 or claim 7.

In particular such lamp comprises a glass envelope having electrodes at its ends, a mercury inert gas filling within said glass envelope which produces ultraviolet radiation, and a phosphor coating which converts a substantial portion of said ultraviolet radiation to visible illumination having a white color, with said coating comprising a layer of phosphor particles having a particle size range extending from about 4 microns average diameter up to about 8 microns diameter, said phosphor having the general formula:

$$Ca_{10-a-w-x}Cd_wMn_xSb_a(PO_4)_6F_{2-a-y}\,Cl_yO_a$$

wherein

a is in the approximate range of 0.1—0.2

w is in the approximate range of 0—0.2

x is in the approximate range of 0.15—0.5, and
y is in the approximate range of 0.03—0.3

said phosphor layer having been deposited at a dry coating weight in the range from about 1.7 milligrams per square centimeter up to about 4.0 milligrams per square centimeter at said particle size range to maintain efficient lumen output at a substantially reduced coating weight. The used phosphor particles are obtainable according to the preparation method of claim 12.

The total metal ion content in the present phosphors is desirably maintained equal to at least 9.97 in order to avoid diluting or deleterious secondary phases being formed during the phosphor synthesis.

It will be apparent therefrom and the above specified phosphor formula that an essentially stoichiometric calcium halophosphate phosphor is thereby required of the same type as previously described in U.S. Patent 3,109,819.

As distinct from said prior art phosphor preparation wherein the antimony level of the disclosed calcium halophosphate phosphor is maintained no greater than 0.10 mole per mole of phosphor, however, the higher level of antimony in the presently modified phosphor further requires some modification in the phosphor synthesis to be hereinafter more fully explained. By means of such modification in the phospor synthesis the individual phosphor particles prepared in this manner are predominantly single crystals substantially devoid of agglomerated smaller size crystals as well as being a single phase material substantially devoid of secondary diluting or deleterious phases. It would be further noted from the above specified phosphor formula that cadmium metal ion is only an optional constituent in the presently modified phosphor since superior maintenance of the phosphor without this constituent has been demonstrated.

In its preferred embodiments, the modified phosphor generates white light in a fluorescent lamp at the customary color points of cool white, white, and warm white by adjusting the manganese and halogen levels in said phosphor within the above specified ranges. Furthermore, said presently modified phosphor converts substantially all of the incident ultraviolet radiation into visible light when utilized in the low pressure type fluorescent lamps hereafter described.

Synthesis of the presently modified phosphor requires particular control of the atmosphere conditions when the phosphor material is being formed. More particularly, in the 2-step firing method of preparation for said phosphor herein described it becomes essential that only lowered oxygen content atmosphere conditions be utilized during both of the firing steps. Such atmosphere conditions are required during the first firing step to insure that a higher antimony content can be incorporated into the apatite lattice when the phosphor is first formed. Refiring of the first fired phosphor is also required to be carried out under lower oxygen conditions which minimizes oxidation of the incorporated antimony ion to a higher valence state. Any significant oxidation of the incorporated antimony ion in the phosphor lattice to a higher valence state is objectionable since the converted ion only absorbs ultraviolet radiation but does not further produced visible light with the absorbed ultraviolet radiation. The converted ion can further react to form other non-light producing secondary phases in the otherwise substantially single phase phosphor material.

The first-fired phosphor is milled before refiring in the illustrated method of preparation using high energy means such as the commercially available Trost Air Mill or Sturdevant Jet Mill to produce phosphor particles having the desired particle size and crystalline form.

Accordingly, a preferred method for preparation of the above defined improved phosphor comprises (1) mixing a batch of ingredients which will yield the said phosphor material upon firing wherein the batch proportions of divalent metal, fluorine and phosphorous are as set forth in said formula while the batch proportions of antimony and chlorine are in slight excess over that set forth in said formula at an amount sufficient to compensate for volatilization losses during firing, (2) firing the batch at a temperature in the approximate range 1050°—1150°C under controlled atmosphere conditions enabling antimony incorportion in the phosphor lattice until the phosphor is formed, (3) milling the first-fired phosphor sufficient to produce a phosphor particle size range extending from about 4 microns average diameter up to about 8 microns average diameter, and (4) refiring the milled phosphor at a temperature in the approximate range 900°—1100°C under controlled atmosphere conditions preventing antimony oxidation to a higher valence state. Suitable lowered oxygen content conditions in the first firing step can be achieved in an inert atmosphere such as nitrogen or by simply firing the batch ingredients in covered dishes with air. Similarly, the refiring of the first-fired and milled phosphor product can be carried out in an inert atmosphere but which may preferably further include a minor oxygen content in the approximate range 50—5000 ppm. Such minor inclusion of oxygen in the refiring step insures that the stoichiometric oxygen content in the above specified phosphor formula will be achieved.

A representative fluorescent lamp for the present invention comprises a sealed envelope enclosing means to generate a mercury discharge within said envelope to convert a major portion of the ultraviolet radiation emitted from said discharge into visible light having a white color. In preferred embodiments, said mercury discharge is a conventional low pressure discharge and the phosphor coating is a single layer having the above defined composition with manganese and halogen levels of said phosphor being adjusted in the otherwise conventional manner. For example, such lamp exhibiting a cool white color point utilizes a manganese content in the approximate range 0.15—0.20 mole per mole of phosphor whereas the antimony level in said phosphor resides in the approximate range 0.1—0.2 mole per mole of phosphor. A

different lamp in accordance with the present invention exhibiting a white color point with trichromatic coordinates of approximately X = 0.409 and Y = 0.394 contains manganese ion in the approximate range 0.23—0.28 mole per mole of phosphor with the antimony level residing in the approximate range 0.1—0.2 mole per mole of phosphor.

Figure 1 illustrates in perspective a view of a partially broken away section of a low pressure mercury discharge fluorescent lamp construction utilizing a phosphor coating in accordance with the present invention; and

Figure 2 is a graph depicting lumen performance for various phosphor coatings in the Figure 1 type lamp construction.

Referring to Figure 1, there is depicted a representative fluorescent lamp 1 comprising an elongated soda-lime silicate glass envelope 2 having a circular cross-secton. The low pressure mercury discharge assembly in said lamp includes a conventional electrode structure 3 at each end connected to lead-in wires 4 and 5 which extend through a glass press seal 6 in a mount stem 7 to the electrical contacts of a base 8 fixed at both ends of the sealed glass envelope. The discharge-sustaining filling in the sealed glass envelope is an inert gas such as argon or a mixture of argon and other rare earth gases at a low pressure in combination with a small quantity of mercury to provide the low vapor pessure manner of lamp operation. The inner surface of the tubular glass bulb is provided with a phosphor coating 9 which comprises a modified calcium halophosphate phosphor material according to the present invention providing white color illumination at the desired lamp color point. To further illustrate the degree of improvement obtained with the presently modified phosphor compositions at various phosphor coating weights, a number of fluorescent lamps having the known 450T12 construction at a nominal 40 watt rating were built and tested utilizing the cool white type phosphor. Said modified phosphor contained a 0.18 molar manganese content along with a 0.10 molar antimony content and its particle size averge 6.7 microns diameter. The lumen values achieved in said test lamps are reported in Table I below.

TABLE I

| Example | Coating Weight (Mg/cm$^2$) | Lumens 100 (h) |
|---|---|---|
| 1. | 2.12 | 2985 |
| 2. | 2.62 | 3056 |
| 3. | 3.54 | 3094 |
| 4. | 3.76 | 3115 |
| 5. | 4.07 | 3104 |

From the above lamp tests it can first be noted that all reduced coating weights still maintain a lumen level comparable to the lumen output derived with much higher coating weights of the conventional phosphor. It can be further noted from said test results that the examples 1—2 phosphor coatings further provide about the same lumen output thereby demonstrating that coating weights of the presently improved phosphor residing in the range 2.0—3.0 milligrams per square centimeter cover the entire glass surface area so that little ultraviolet radiation can escape as well as efficiently absorbing and converting the ultraviolet radiation from the lamp discharge to white light.

In Figure 2, a graph is depicted which further compares the 100 hour lumen performance in the above described type lamp construction between the reduced weight phosphor coatings of the present invention and comparable coating weights of a conventional calcium halophosphate phosphor. As can be noted from curve 10 on said graph, the conventional phosphor coatings having an antimony content of 0.06 mole per mole of phosphor and 10—12 microns diameter particle size exhibit a sharp lumen drop at coating weights less than about 3.5 milligrams per square centimeter. The lumen performance achieved with the coating weights of phosphor disclosed in examples of 1—5 above which also appear on said graph as curve 11 do not experience a similar reduction in lumen output at the 6.7 micron diameter average particle size employed. Understandably, a lower particle size of said modified phosphor enables even lower coating weights at comparable lumen values.

## Claims

1. In a fluorescent lamp comprising a glass envelope having electrodes at its ends, a mercury and inert gas filling within said glass envelope which produces ultraviolet radiation, and a phosphor coating which converts a substantial portion of said ultraviolet radiation to visible illumination having a white color, the

improvement wherein said coating comprises a layer of phosphor particles having a particle size range extending from about 4 microns average diameter up to about 8 microns average diameter, said phosphor having the general formula:

$$Ca_{10-a-w-x}Cd_wMn_xSb_a(PO_4)_6F_{2-a-y}Cl_yO_a$$

wherein
a is in the approximate range of 0.1—0.2
w is in the approximate range of 0—0.2
x is in the approximate range of 0.15—0.5, and
y is in the approximate range of 0.03—0.3
said phosphor layer having been deposited at a dry coating weight in the range from about 1.7 milligrams per square centimeter up to about 4.0 milligrams per square centimeter at said particle size range to maintain efficient lumen output at a substantially reduced coating weight, said phosphor particles being obtainable according to the preparation method of claim 12.

2. A lamp as in claim 1 exhibiting a cool white color point wherein x is in the approximate range 0.15—0.20 and a is in the approximate range 0.1—0.2.

3. A lamp as in claim 1 exhibiting a white color point having trichromatic coordinates of approximately X = 0.409 and Y = 0.394 wherein x is in the approximate range 0.23—0.28 and a is in the approximate range 0.1—0.2.

4. A lamp as in claim 1 wherein said individual phosphor particles are predominantly single crystals substantially devoid of agglomerated smaller size crystals.

5. A lamp as in claim 1 wherein said phosphor is essentially a single phase material substantially devoid of secondary diluting or deleterious phases.

6. A lamp as in claim 1 wherein said glass envelope comprises a cylindrical tube.

7. In a fluorescent lamp comprising a tubular shaped glass envelope having electrodes at its ends, a mercury and inert gas filling which produces a low pressure discharge of ultraviolet radiation, and a phosphor coating deposited on the interior surface of said glass envelope which converts substantially all of the incident ultraviolet radiation to visible illumination having a white color, the improvement wherein said coating comprises a layer of phosphor particles having a particle size range extending from about 4 microns average diameter up to about 8 microns average diameter, said phosphor having the general formula:

$$Ca_{10-a-w-x}Cd_wMn_xSb_a(PO_4)_6F_{2-a-y}Cl_yO_a$$

wherein
a is in the approximate range of 0.1—0.2
w is in the approximate range of 0—0.2
x is in the approximate range of 0.15—0.5, and
y is in the approximate range of 0.03—0.3
said phosphor layer having been deposited at a dry coating weight in the range from about 1.7 milligrams per square centimeter up to about 4.0 milligrams per square centimeter at said particle size range to maintain efficient lumen output at a substantially reduced coating weight, said phosphor particles being obtainable according to the preparation method of claim 12.

8. A lamp as in claim 7 exhibiting a cool white color point wherein x is in the approximate 0.15—0.20 and a is in the approximate range 0.1—0.2.

9. A lamp as in claim 7 exhibiting a white color point having trichromatic coordinates of approximately X = 0.409 and Y = 0.394 wherein x is in the approximate range 0.23—0.28 and a is in the approximate range 0.1—0.2.

10. A lamp as in claim 7 wherein said individual phosphor particles are predominantly single crystals substantially devoid of agglomerated smaller size crystals.

11. A lamp as in claim 7 wherein said phosphor is essentially a single phase material substantially devoid of secondary diluting or deleterious phases.

12. A method of preparation of an essentially stoichiometric halophosphate phosphor having the general formula:

$$Ca_{10-a-w-x}Cd_wMn_xSb_a(PO_4)_6F_{2-a-y}Cl_yO_a$$

wherein
a is in the approximate range of 0.1—0.2
w is in the approximate range of 0—0.2
x is in the approximate range of 0.15—0.5, and
y is in the approximate range of 0.03—0.3,
which comprises (1) mixing a batch of ingredients which will yield the said phosphor material upon firing and wherein the batch proportions of divalent metal, fluorine and phosphorous are as set forth in said formula while the batch proportions of antimony and chlorine are in slight excess over that set forth in said formula at an amount sufficient to compensate for volatilization losses occurring during firing, (2) firing the batch at a temperature in the approximate range 1050°—1150°C under lowered oxygen content atmosphere conditions enabling antimony incorporation in the phosphor lattice until the phosphor is formed, (3) milling the first-fired phosphor sufficient to produce a phosphor particle size range extending from about 4

microns average diameter up to about 8 microns average diameter, and (4) refiring the milled phosphor at a temperature in the approximate range 900°—1100°C under lowered oxygen content atmosphere conditions preventing antimony oxidation to a higher valence state.

13. A method as in claim 12 wherein the atmosphere conditions during first firing of the phosphor comprises an inert atmosphere.

14. A method as in claim 12 wherein the phosphor is milled with relatively high energy means.

15. A method as in claim 12 wherein the atmosphere condition during refiring of the phosphor comprises an inert atmosphere.

16. A method as in claim 15 wherein said atmosphere condition further include a minor oxygen content in the approximate range 50—5000 ppm.

17. A method as in claim 12 wherein the atmosphere conditions during both first firing and refiring of the phosphor comprises an inert atmosphere.

18. A method as in claim 17 wherein the inert atmosphere during refiring of the phosphor further includes an oxygen content in the approximate range 50—5000 ppm.

**Patentansprüche**

1. In einer Fluoreszenzlampe mit einem Glaskolben, der Elektroden an seinen Enden aufweist, einer Füllung aus Quecksilber und Inertgas innerhalb des Glaskolbens, die UV-Strahlung erzeugt und einem Leuchtstoffüberzug, der einen beträchtlichen Anteil der UV-Strahlung in sichtbare Beleuchtung umwandelt, die eine weiße Farbe hat, die Verbesserung, bei der der Überzug eine Schicht aus Leuchtstoffteilchen mit einem Teilchengrößenbereich umfaßt, der sich von etwa 4 µm mittlerem Durchmesser bis zu etwa 8 µm mittleren Durchmessers erstreckt, wobei der Leuchtstoff die allgemeine Formel hat:

$$Ca_{10-a-w-x}Cd_wMn_xSb_a(PO_4)_6F_{2-a-y}Cl_yO_a$$

worin

a im etwaigen Bereich von 0,1 bis 0,2 liegt,
w im etwaigen Bereich von 0 bis 0,2 liegt,
x im etwaigen Bereich von 0,15 bis 0,5 liegt und
y im etwaigen Bereich von 0,03 bis 0,3 liegt,

die Leuchtstoffschicht mit einem trockenen Überzugsgewicht im Bereich von etwa 1,7 mg/cm$^2$ bis zu etwa 4,0 mg/cm$^2$ bei dem genannten Teilchengrößenbereich aufgebracht worden ist, um eine wirksame Lumenabgabe bei beträchtlich vermindertem Überzugsgewicht aufrechtzuerhalten und die Leuchtstoffteilchen nach dem Herstellungsverfahren des Anspruchs 12 erhältlich sind.

2. Lampe nach Anspruch 1, die einen kaltweißen Farbpunkt aufweist, worin x im etwaigen Bereich von 0,15 bis 0,20 liegt und a im etwaigen Bereich von 0,1 bis 0,2 liegt.

3. Lampe nach Anspruch 1, die einen weißen Farbpunkt aufweist, der die trichromatischen Koordinaten von etwa X = 0,409 und Y = 0,394 hat, worin X im etwaigen Bereich von 0,23 bis 0,28 liegt und a im etwaigen Bereich von 0,1 bis 0,2 liegt.

4. Lampe nach Anspruch 1, worin die einzelnen Leuchtstoffteilchen hauptsächlich Einkristalle sind, im wesentlichen frei von agglomerierten Kristallen kleinerer Größe.

5. Lampe nach Anspruch 1, worin der Leuchtstoff im wesentlichen ein einphasiges Material ist, das im wesentlichen frei ist von sekundären verdünnenden oder nachteiligen Phasen.

6. Lampe nach Anspruch 1, worin der Glaskolben ein zylindrisches Rohr umfaßt.

7. In einer Leuchtstofflampe mit einem rohrförmigen Glaskolben, der Elektroden in seinen Enden aufweist, einer Füllung aus Quecksilber und Inertgas, die eine Entladung von UV-Strahlung bei geringem Druck erzeugt und einem Leuchtstoffüberzug, der auf der inneren Oberfläche des Glaskolbens aufgetragen ist, und im wesentlichen die gesamte auftreffende UV-Strahlung in sichtbare Beleuchtung einer weißen Farbe umwandelt, die Verbesserung, bei der Überzug eine Schicht aus Leuchtstoffteilchen umfaßt, die einen Teilchengrößenbereich haben, der sich von etwa 4 µm mittlerem Durchmesser bis zu etwa 8 µm mittlerem Durchmesser erstreckt und der Leuchtstoff die allgemeine Formel hat:

$$Ca_{10-a-w-x}Cd_wMn_xSb_a(PO_4)_6F_{2-a-y}Cl_yO_a$$

worin

a im etwaigen Bereich von 0,1 bis 0,2 liegt,
w im etwaigen Bereich von 0 bis 0,2 liegt,
x im etwaigen Bereich von 0,15 bis 0,5 liegt und
y im etwaigen Bereich von 0,03 bis 0,3 liegt,

worin die Leuchtstoffschicht mit einem trockenen Überzugsgewicht im Bereich von etwa 1,7 mg/cm$^2$ bis zu etwa 4,0 mg/cm$^2$ bei dem genannten Teilchengrößenbereich aufgebracht worden ist, um eine wirksame Lumenabgabe bei beträchtlich vermindertem Überzugsgewicht aufrechtzuerhalten und die Leuchtstoffteilchen nach dem Herstellungsverfahren des Anspruchs 12 erhältlich sind.

8. Lampe nach Anspruch 7, die einen kaltweißen Farbpunkt aufweist, worin x im etwaigen Bereich von 0,15 bis 0,20 und a im etwaigen Bereich von 0,1 bis 0,2 liegt.

9. Lampe nach Anspruch 7, die einen weißen Farbpunkt aufweist, der trichromatische Koordinaten von etwa X = 0,409 und Y = 0,394 hat, worin x im etwaigen Bereich von 0,23 bis 0,28 und a im etwaigen Bereich von 0,1 bis 0,2 liegt.

10. Lampe nach Anspruch 7, worin die einzelnen Leuchtstoffteilchen vorwiegend Einkristalle sind, im wesentlichen frei von agglomerierten Kristallen geringerer Größe.

11. Lampe nach Anspruch 7, worin der Leuchtstoff im wesentlichen ein einphasiges Material ist, im wesentlichen frei von sekundären verdünnenden oder nachteiligen Phasen.

12. Verfahren zum Herstellen eines im wesentlichen stöchiometrischen Halophosphat-Leuchtstoffes der allgemeinen Formel:

$$Ca_{10-a-w-x}Cd_wMn_xSb_a(PO_4)_6F_{2-a-y}Cl_yO_a$$

worin

a im etwaigen Bereich von 0,1 bis 0,2 liegt,
w im etwaigen Bereich von 0 bis 0,2 liegt,
x im etwaigen Bereich von 0,15 bis 0,5 liegt und
w im etwaigen Bereich von 0,03 bis 0,3 liegt,

umfassend

(1) Mischen einer Masse von Ingredienzen, die nach dem Glühen das genannte Leuchstoffmaterial ergeben und worin die Mengenanteile von zweiwertigem Metall, Fluor und Phosphor wie in der obigen Formel angegeben vorliegen, während die Mengenanteile von Antimon und Chlor gegenüber den in der Formel angegebenen in geringem Überschuß bei einer Menge vorhanden sind, die ausreicht, die Verdampfungsverluste während des Glühens zu kompensieren,

(2) Glühen der Masse bei einer Temperatur im etwaigen Bereich von 1050°C bis 1150°C unter atmosphärischen Bedingungen mit einem verminderten Sauerstoffgehalt, der den Antimoneinbau in das Leuchtstoffgitter ermöglicht, während der Leuchtstoff gebildet wird,

(3) Mahlen des einmal geglühten Leuchtstoffes in einer genügenden Weise, um einen Leuchtstoffteilchen-Größenbereich zu erzeugen, der sich von etwa 4 µm mittlerem Durchmesser bis zu etwa 8 µm mittlerem Durchmesser erstreckt und

(4) nochmaliges Glühen des gemahlenen Leuchtstoffes bei einer Temperatur im etwaigen Bereich von 900 bis 1100°C unter atmosphärischen Bedingungen mit verringertem Sauerstoffgehalt, der die Antimonoxidation in einen höheren Wertigkeitszustand verhindert.

13. Verfahren nach Anspruch 12, worin die atmosphärischen Bedingungen während des ersten Glühens des Leuchtstoffes eine inerte Atmosphäre umfassen.

14. Verfahren nach Anspruch 12, worin der Leuchtstoff mit einer Einrichtung relativ hoher Energie gemahlen wird.

15. Verfahren nach Anspruch 12, worin die atmosphärischen Bedingungen während des erneuten Glühens des Leuchtstoffes eine inerte Atmosphäre umfassen.

16. Verfahren nach Anspruch 15, worin die atmosphärischen Bedingungen weiter einen untergeordneten Sauerstoffgehalt im etwaigen Bereich von 50 bis 5000 ppm einschließen.

17. Verfahren nach Anspruch 12, worin die atmosphärischen Bedingungen sowohl während des ersten Glühens als auch während des erneuten Glühens des Leuchtstoffes eine inerte Atmosphäre umfassen.

18. Verfahren nach Anspruch 17, worin die inerte Atmosphäre während des erneuten Glühens des Leuchtstoffes weiter einen Sauerstoffgehalt im etwaigen Bereich von 50 bis 5000 ppm einschließt.

**Revendications**

1. Dans une lampe fluorescente comprenant une enveloppe en verre ayant des électrodes à ses extrémités, un remplissage avec du mercure et un gaz inerte à l'intérieur de l'enveloppe en verre qui produit un rayonnement ultraviolet, et un revêtement en substance fluorescente qui transforme une partie importante du rayonnement ultraviolet en éclairage visible de couleur blanche, le perfectionnement dans lequel le revêtement comprend une couche de particules de substance fluorescente ayant une gamme des dimensions des particules s'étendant entre un diamètre moyen d'environ 4 micromètres et un diamètre moyen d'environ 8 micromètres, la substance fluorescente répondant à la formule générale:

$$Ca_{10-a-w-x}Cd_wMn_xSb_a(PO_4)_6F_{2-a-y}Cl_yO_a$$

dans laquelle

a se trouve dans la gamme approximative 0,1—0,2
w dans la gamme approximative 0—0,2
x dans la gamme approximative 0,15—0,5
y dans la gamme approximative 0,03—0,3,

la couche de substance fluorescente ayant été déposée à un poids du revêtement à sec compris dans la gamme allant d'environ 1,7 milligramme par centimètre carré à environ 4,0 milligrammes par centimètre carré pour la gamme des dimensions des particules afin de maintenir une sortie efficace en lumens à un poids du revêtement sensiblement réduit, les particules de substance fluorescente pouvant être obtenues en conformité avec le procédé de préparation de la revendication 12.

2. Lampe selon la revendication 1, présentant un point de couleur blanche froide, où x se trouve dans la

gamme approximative 0,15—0,20 et a dans la gamme approximative 0,1—0,2.

3. Lampe selon la revendication 1, présentant un point de couleur blanche ayant les coordonées trichromatiques d'environ X = 0,409 et Y = 0,394, où x se trouve dans la gamme approximative 0,23—0,28 et a dans la gamme approximative 0,1—0,2.

4. Lampe selon la revendication 1, dans laquelle les particules individuelles de substance fluorescente sont principalement des monocristaux pratiquement exempts de cristaux agglomérés de taille plus petite.

5. Lampe selon la revendication 1, dans laquelle la substance fluorescente est essentiellement un matériau à une phase exempt sensiblement des phases de dilution secondaires ou phases néfastes.

6. Lampe selon la revendication 1, dans laquelle l'enveloppe en verre est un tube cylindrique.

7. Dans une lampe fluorescente comprenant une enveloppe en verre de forme tubulaire qui comporte des électrodes à ses extrémités, un remplissage en mercure et un gaz inerte qui produit une décharge à faible pression du rayonnement ultraviolet, et un revêtement en substance fluorescente déposé sur la surface intérieure de l'enveloppe en verre qui convertit le quasi-totalité du rayonnement ultraviolet incident en éclairage visible de couleur blanche, le perfectionnement dans lequel le revêtement comprend une couche de particules de substance fluorescente ayant une gamme des dimensions des particules s'étendant entre un diamètre moyen d'environ 4 micromètres et un diamètre moyen d'environ 8 micromètres, la substance fluorescente répondant à la formule générale:

$$Ca_{10-a-w-x}Cd_wMn_xSb_a(PO_4)_6F_{2-a-y}Cl_yO_a$$

dans laquelle
- a se trouve dans la gamme approximative 0,1—0,2
- w dans la gamme approximative 0—0,2
- x dans la gamme approximative 0,15—0,5
- y dans la gamme approximative 0,03—0,3,

la couche de substance fluorescente ayant été déposée à un poids du revêtement à sec dans la gamme comprise entre environ 1,7 milligramme par centimètre carré et environ 4,0 milligrammes par centimètre carré pour la gamme des dimensions des particules afin de maintenir une sortie efficace en lumens pour un poids sensiblement réduit du revêtement, les particules de substance fluorescente pouvant être obtenues conformément au procédé de préparation de la revendication 12.

8. Lampe selon la revendication 7, présentant un point de couleur blanche froide, dans laquelle x se trouve dans la gamme approximative 0,15—0,20 et a dans la gamme approximative 0,1—0,2.

9. Lampe selon la revendication 7, présentant un point de couleur blanche ayant les coordonnées trichromatiques d'environ X = 0,409 et Y = 0,394, où x se trouve dans la gamme approximative 0,23—0,28 et a dans la gamme approximative 0,1—0,2.

10. Lampe selon la revendication 7, dans laquelle les particules individuelles de la substance fluorescente sont principalement des monocristaux pratiquement exempts de cristaux agglomérés de taille plus petite.

11. Lampe selon la revendication 7, dans laquelle la substance fluorescente est essentiellement un matériau à une phase sensiblement exempt des phases de dilution secondaires ou phases néfastes.

12. Procédé de préparation d'une substance fluorescente en halophosphate essentiellement stoechiométrique, répondant à la formule générale:

$$Ca_{10-a-w-x}Cd_wMn_xSb_a(PO_4)_6F_{2-a-y}Cl_yO_a$$

dans laquelle
- a se trouve dans la gamme approximative 0,1—0,2
- w dans la gamme approximative 0—0,2
- x dans la gamme approximative 0,15—0,5
- y dans la gamme approximative 0,03—0,3,

qui comprend les étapes consistant à (1) mélanger un lot d'ingrédients qui donneront la substance fluorescente par cuisson et où les proportions dans le lot du métal divalent, du fluor et du phosphore sont telles qu'indiqué dans la formule alors que les proportions dans le lot de l'antimoine et du chlore sont légèrement en excès par rapport à ce qui est indiqué dans la formule suivant une quantité suffisante pour compenser les pertes par volatilisation se produisant pendant la cuisson, (2) cuire le lot à une température comprise dans la gamme approximative 1050—1150°C dans des conditions d'une atmosphère à teneur en oxygène abaissée permettant l'incorporation de l'antimoine dans le réseau de la subtance fluorescente jusqu'à la formation de cette substance, (3) broyer le phosphore cuit en premier lieu d'une façon suffisante pour produire une gamme des dimensions des particules de la substance fluorescente s'étendant entre un diamètre moyen d'environ 4 micromètres et un diamètre moyen d'environ 8 micromètres, et (4) recuire la substance fluorescente broyée à une température comprise dans la gamme approximative 900°—1100°C dans des conditions de l'atmosphère à teneur plus faible en oxygène, empêchant l'oxydation de l'antimoine jusqu'à un état de valence plus élevé.

13. Procédé selon la revendication 12, dans lequel les conditions de l'atmosphère pendant la première cuisson de la substance fluorescente comprennent une atmosphère inerte.

14. Procédé selon la revendication 12, dans lequel la substance fluorescente est broyée avec un moyen développant une énergie relativement élevée.

15. Procédé selon la revendication 12, dans lequel les conditions de l'atmosphère pendant la nouvelle cuisson de la substance fluorescente comprennent une atmosphère inerte.

16. Procédé selon la revendication 15, dans lequel les conditions de l'atmosphère comportent en outre une faible teneur en oxygène dans la gamme approchée 50—5000 ppm.

17. Procédé selon la revendication 12, dans lequel les conditions de l'atmosphère pendant la première cuisson ainsi que pendant la nouvelle cuisson de la substance fluorescente comprennent une atmosphère inerte.

18. Procédé selon la revendication 17, dans lequel l'atmosphère inerte pendant la nouvelle cuisson de la substance fluorescente comprend en outre une teneur en oxygène située dans la gamme approximative 50—5000 ppm.

Fig. 1

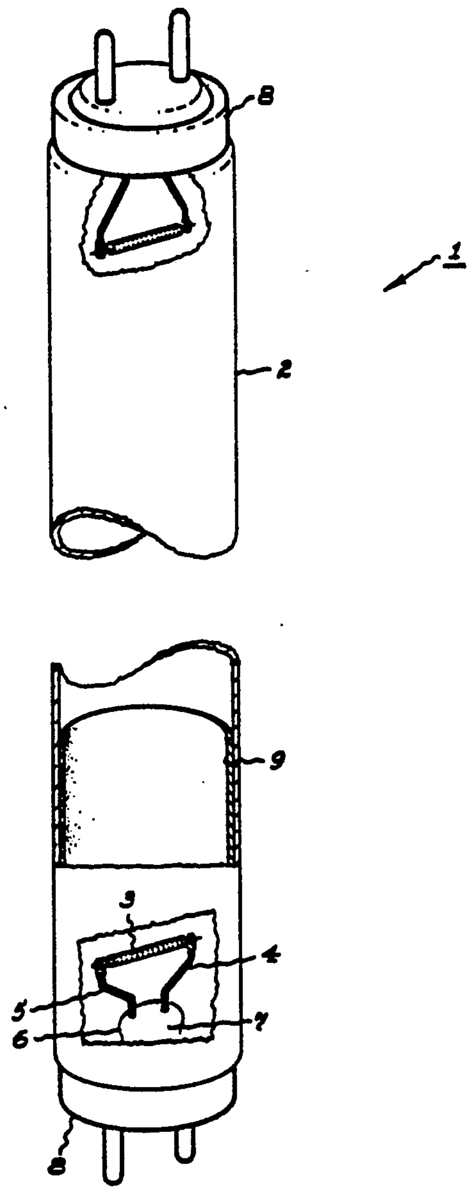

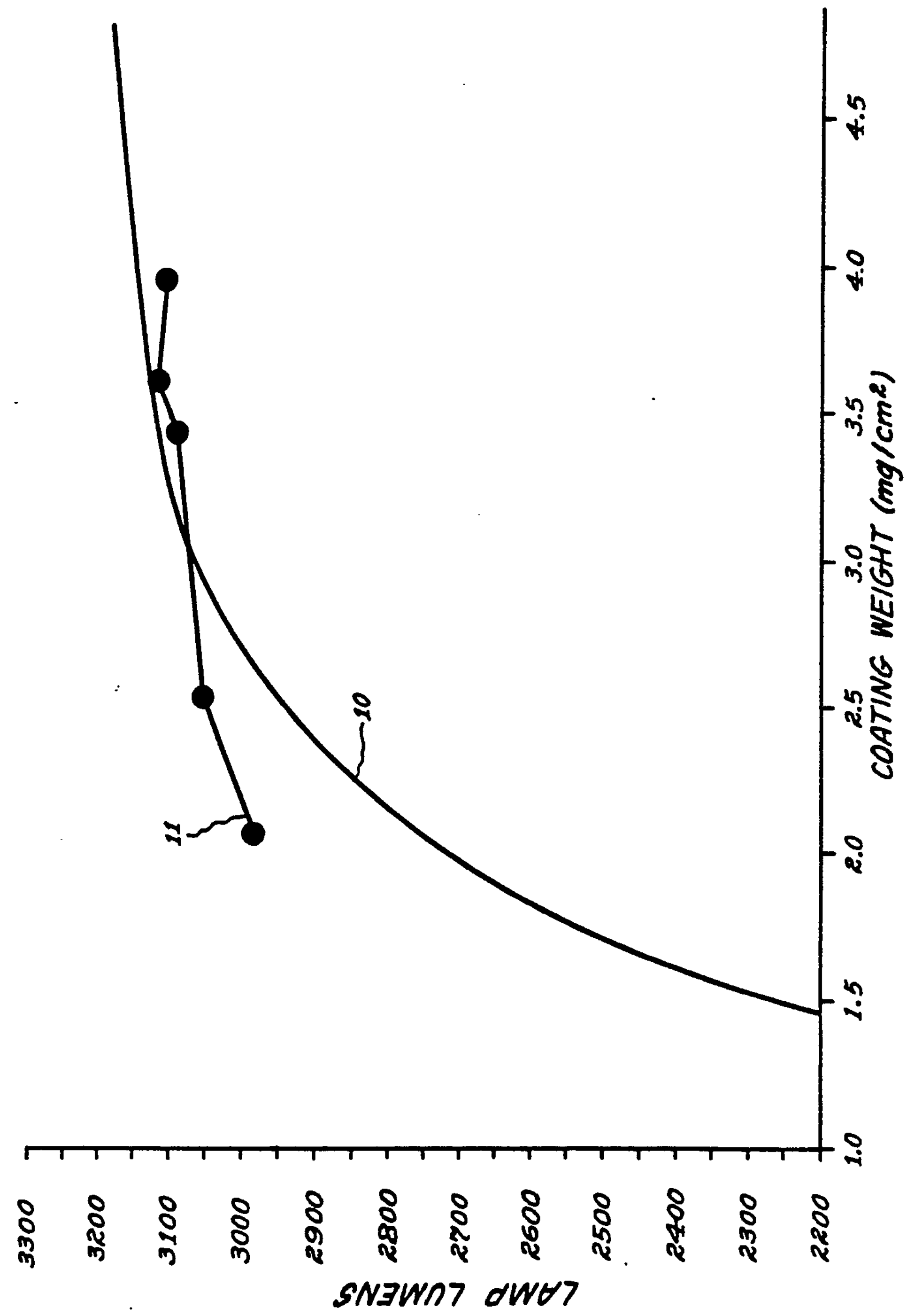
LAMP LUMENS
3300
3200
3100
3000
2900
2800
2700
2600
2500
2400
2300
2200
COATING WEIGHT (mg/cm²)
1.0
1.5
2.0
2.5
3.0
3.5
4.0
4.5
10
11

Fig. 2